# EUROPEAN PATENT SPECIFICATION

(11) **EP 2 699 085 B1**
(45) Date of publication and mention of the grant of the patent: **09.01.2019**
(21) Application number: 12722184.4
(22) Date of filing: 19.04.2012
(51) Int. Cl.: A01N 25/08, A01N 25/00, C05G 3/00, C05F 11/10, A01N 25/12

(54) **COMPOSITION FOR SEED GROWTH AND VIGOUR IN MONOCOTS**
ZUSAMMENSETZUNG FÜR SAATWACHSTUM UND TRIEBKRAFT BEI EINKEIMBLÄTTRIGEN
COMPOSITIONS POUR LA CROISSANCE ET LA VIGUEUR DE MONOCOTYLES

(30) Priority: 20.04.2011 GB 201106764
(43) Date of publication of application: 26.02.2014
(73) Proprietor: Exosect Limited, Colden Common Winchester Hampshire SO21 1TH (GB)
(72) Inventor: JESSOP, Nicholas Hugh Hylton, Winchester Hampshire S021 1TH (GB)
(74) Representative: Schlich, George
(86) International application number: PCT/GB2012/000367
(87) International publication number: WO 2012/143685

(56) References cited:
- WO-A1-01/59017
- WO-A1-97/33472
- WO-A1-99/07654
- WO-A2-01/78509
- GB-A- 2 118 158
- US-A- 2 936 226
- US-A- 4 021 262
- US-A- 5 283 060
- US-A1- 2007 072 775
- US-A1- 2009 143 447
- unknown author: "Wax", Wikipedia, the free encyclopdia , 25 November 2012 (2012-11-25), XP002688447, Retrieved from the Internet: URL:http://en.wikipedia.org/wiki/Wax [retrieved on 2012-12-03]
- Clare G. Armsworth ET AL: "Effects of Adhesive Powders on the Mating and Flight Behavior of Mediterranean Fruit Fly (Diptera: Tephritidae)", Journal of Economic Entomology, 1 January 2006 (2006-01-01), pages 1194-1202, XP055298826, United States DOI: 10.1603/0022-0493(2006)99[1194:EOAPOT]2.0. CO;2 Retrieved from the Internet: URL:http://www.bioone.org/doi/pdf/10.1603/ 0022-0493-99.4.1194

## Description

The present invention relates to coating compositions including an organic component for applying to plant structures of monocotyledonous plants ("monocots") from which roots and shoots are capable of growing, uses of coating compositions on plant structures of monocots, methods of producing such coating compositions and monocot plant structures coated with such coating compositions. In particular, the invention relates to coating compositions that comprise an organic material that provides protection from environmental stresses to monocot plant structures.

Young monocot plants grown from monocot plant structures such as bulbs or monocot seed are vulnerable to abiotic and environmental stresses, particularly in growing habitats that have low rainfall and/or sub-optimal soil quality. Losses due to sub-optimal soil quality are typically realised in the growth of young plants lacking plant vigour in which the plants do not become well established, such as where the rooting systems do not develop and in circumstances where essential elements in the soil are not readily available. Agronomic losses due to young monocot plants not being well established remain unacceptably high on soils which are for example mineral deficient despite the employment of conventional inorganic monocot plant structure coatings such as monocot seed coatings that typically include essential elements for establishing young seedlings. A problem with the use of such conventional coatings is that they introduce nutrients to the soil in unbalanced quantities and this can have adverse effects on plant growth and vigour in unforeseen ways. Additionally, such conventional coatings are typically applied in the form of wet slurries to monocot plant structures. Once applied, the coatings are typically dried on the monocot plant structures and this drying may cause further abiotic stresses, which in turn may have deleterious consequences on the viability of young plants grown therefrom. Additionally, such conventionally applied coatings may not be applied to monocot plant structures such as seeds evenly, and as a consequence, such coatings tend to be susceptible to chipping and/or flaking. Furthermore, the degree of coating uniformity of such conventionally applied coatings typically is not optimal, with a percentage of monocot plant structures of any one batch receiving little or no coating depending on the coating method being deployed.

US 2936226 in the name of Kaufman et al describes a soil nutrient comprising a ¼" pellets comprising small particles of trace elements dispersed within wax. Application of these wax pellets to the soil results in leaching of the trace element into the soil over a period of approximately 100-200 days. Such pellets are not suitable for use as coatings for monocotyledonous plants.

US 2007/072775 in the name of OMS Investments describes pellets of a coated granular material for providing a slow release of nutrients and biologically active ingredients in to the soil, typically over a period of 30 days to 104 weeks. The pellets comprise a granular material, typically a fertilizer, coated with a wax shell incorporating a biologically active material, and further coated in a polymeric coating. The pellet release both the granular material and the biologically active material over a period of time via osmotic transport. Again such pellets are not suitable for use as coatings for monocotyledonous plants.

GB2188158 in the name of Biochemical Marketing describes a plant growth stimulator formulation comprising one of more long-chain carboxylic acids having between 14 and 48 carbon atom, and salts, esters and derivatives thereof in combination with a substantially larger proportion of at least one metal ion having a valence of +2 or +3. The carboxylic acid may be found in some waxes and the composition is dissolved in water for application to plants as a drench or soak. This composition is for use in solution and as a result would not be suitable for use as a coating composition in the form of particles.

US5283060 in the name of Shieh Tsuong described pesticide granules for delivery of a biological pesticide in aquatic applications. The pellets have a wax core surrounded by a water dispersible matrix containing the pesticide. The wax core is used to ensure that the pellets are water floatable. WO 99/07654 in the name of Ben Gurion University describes another controlled-release fertilizer comprising a core of fertilizer material coated in a polymeric material containing at least one hormone, and possible further coated in a wax shell. WO 01/78509 in the name of Priexnitz Uwe et al, describes a method for producing wax premixes containing an agrochemical together with a vegetable or mineral oil and a wax. The composition is mixed in a sharp-edged mixing device at a temperature below the melting point of the wax. None of these describe a composition suitable for coating a monocotyledonous plant structure.

Clare G Armsworth et al, "Effects of Adhesive Powders on the Mating and Flight Behaviours of Mediterranean Fruit Fly (Diptera; Tephritidae)", Journal of Economic Entomology, pages 1194 - 1202, 1 January 2006 discusses the effect of adhesive powders on insects, such as fruit flies. While this paper indicates the beneficial effects of the use of particles of wax and the like for the control of insects, there is no indication that such particles can be used in any other manner.

WO 01/59017, in the name of Int. Coatings Ltd, describes industrial powder coating compositions incorporating waxes at a rate of 0.03% - 2%. Such coatings are for use on the interior of refrigerators or microwave ovens, alloy wheels, architectural extrusions or radiator thins.

WO 97/33472, in the name of the University of Southampton, describes the adhesion of electrostatically tribo-charged wax-coated particles to insects. Such particles may be applied by direct transfer of the particles to the insect.

US 2009/0143447, in the name of Karen Arthur, describes a seed coating comprising a pesticidal agent, a polyvinyl alcohol (PVA), a graft copolymer, and a plasticiser. Optionally the coating may include a wax slip. The PVA and grant polymer act to adhere the pesticidal agent onto the seed, and to separate and protect the seed from the pesticide.

In the following description, the terms "monocot plant structure treatment" and "monocot plant structure coating" are used interchangeably for the compositions of the invention and their uses to treat monocot plant structures, particularly monocot seeds, by any of the specific methods described in the prior art that provide an improvement, typically an enhancement, of seedling vigour. The commonly used ingredients in monocot seed treatment compositions (sometimes designated as formulations) include antidotes and safeners; fertilisers, micronutrients and inoculants; bioregulators of natural or synthetic origin which are either hormones or interfere in hormone metabolism and do not influence plant nutrition; and/or bioregulators which interfere with plant growth by enhancing nutrient uptake.

It has now been found that by using certain organic materials as components of coatings on monocot plant structures, particularly monocot seeds, together with the application of inorganic components and/or biological agents, plant vigour and plant growth of plant seedlings grown from monocot plant structures, particularly monocot seeds is improved relative to the plant vigour and plant growth of seedlings grown from conventionally treated monocot plant structures and seeds. It has further been found that the quantity of additives, particularly inorganic fertilisers that is required per unit of monocot seed weight is less than that required using conventional farming techniques.

It is an object of the present invention to supply improved monocot seed coatings comprising organic components for monocot seeds.

It is a further object of the present invention to provide improved monocot seed coatings comprising a minimum amount of additives.

These and other objects of the invention will become apparent from the following description and examples.

According to the present invention there is provided a coating composition in dry particulate form for a monocot plant structure, comprising particles of wax
i) having a volume mean diameter in the range of ≥5µm to 200µm;
ii) having a melting point of ≥50°Centigrade; and
iii) comprising at least one additive for enhancing at least one of seedling vigour and seedling growth from monocot plant structures, wherein the at least one additive is selected from one of an inorganic additives and a live biological agent selected from an arbuscular mycorrhizal fungus, an ericoid mycorrhizal fungus, species of bacteria and fungi that are able to act on inorganic and/or organic substrates to release compounds in soluble form from such substrates, and a species of Trichoderma.

The wax of use in the invention acts as a carrier for desired additives for placing on or near to seeds.

For the purposes of the present invention a "monocot plant structure" and a "monocot seed" is one from which roots and shoots are able to grow. Reference to "monocot seed" and "monocot seeds" is used interchangeably herein and means seeds, typically viable seeds, to which compositions of the invention may be applied. Furthermore, "monocot seed" and "monocot seeds" as provided herein means seeds that are capable of germinating to at least conventional levels of germination typical of the relevant monocot plant species under consideration. "Monocot plants" for the purposes of the present invention are ones which are recognised as such by the skilled addressee. Monocot plant seeds suitable for coating with compositions of the invention include those that may be used for the planting of monocotyledonous plants such as varieties of *Oryza spp.* such as *Oryza sativa* (rice), *Triticum spp.* such as *T. aestivum* (wheat: Spring and Winter varieties), *Secale spp.* such as *Secale cereale* (rye), *Avena spp.* such as *Avena sativa* (oats), *Zea spp.* such as *Zea mays* [corn (maize)], *Sorghum spp.* such as *Sorghum bicolor* (sorghum), *Hordeum spp.* such as *Hordeum vulgare* (barley) and hybrid crosses of monotcotyledonous plants such as x *Triticosecale* (*triticale*: cross between wheat and rye), allium species such as onions, and the like.

Preferably, the particles of wax may have a volume mean diameter of from 10 - 100 µm, and most preferably from 10-50µm. Such wax particles include additives as herein defined and may include added further components such as added UV blockers or added antioxidants or the like. Suitable waxes of use in the invention include waxes selected from natural, synthetic and mineral waxes. Suitable waxes of use in the invention most preferably are made up of hard waxes having a melting point of ≥70°C. Examples of natural waxes of use in the present invention include carnauba wax, beeswax, montan wax, Chinese wax, shellac wax, spermaceti wax, myricyl palmitate, cetyl palmitate, candelilla wax, castor wax, ouricury wax, sugar cane wax, retamo wax, rice bran wax and the like. In a preferment, the organic material is selected from carnauba wax, beeswax, montan wax, Chinese wax, shellac wax, spermaceti wax, myricyl palmitate, cetyl palmitate, candelilla wax, castor wax, ouricury wax, and rice bran wax; or a mixture of two or more thereof.

Synthetic waxes of use in the present invention include suitable waxes selected from paraffin wax, microcrystalline wax, Polyethylene waxes, Fischer-Tropsch waxes, substituted amide waxes, polymerized α-olefins and the like.

Mineral waxes of use in the invention include montan wax (e.g. Lumax® Bayer) ceresin wax, ozocerite, peat wax and the like.

Such waxes typically display a high enthalpy of lattice energy during melt. Generally, the particles of use in the invention possess a volume mean diameter in the range of from ≥5µm to 200µm, for example from ≥10µm to 100µm; or from ≥10µm to 40µm; or from >10µm to 30µm or any desired volume mean diameter value in between. Such compositions are considered to be less of a thoracic hazard to humans and are not thought to be allergenic. The skilled addressee will appreciate that the actual VMD of particles of use in the invention that are used on monocot seed will be appropriate to the size of the seeds to which the particles are to be applied. The limit in the sizing of the particles of use in seed coatings of the invention will be apparent to the skilled addressee for monocot seed.
Suitable inorganic agents include commercially available NPK fertilisers that may be added to monocot plant structures, such as monocot seed coatings of the invention. These may be added in the form of dry powders of soluble ions that include the so-called primary macronutrients such as nitrogen, phosphorus, and potassium; the so-called secondary macronutrients such as calcium, sulphur, and magnesium; and the so-called "micronutrients" (trace minerals such as boron, chlorine, manganese, iron, zinc, copper, molybdenum, and selenium). "Macronutrients" are taken up in relatively large quantities and are present in plant tissue in quantities from about 0.2% - 4% on a dry weight basis. "Micronutrients" are taken up in smaller quantities and are present in plant tissue in quantities measured in parts per million (ppm), ranging from about 5 - 200 ppm, or less than 0.02% dry weight.
Additional additives may be selected from bioregulators commonly applied in the art such as brassinosteroids, cytokinines e.g. kinetin or zeatin, the auxins e.g. indolylacetic acid or indolylacetyl aspartate, the flavonoids and isoflavanoids e.g. formononetin or diosmetin, the phytoaixins e.g. glyceolline, phytoalexin-inducing oligosaccharides such as pectin, chitin, chitosan, polygalacuronic acid and oligogalacturonic acid, compounds such as the gibellerins produced by rhizobial symbionts and endophytic microorganisms such as *acetobacter diazotrophicus* and *herbaspitillum seropedicae* and the like.
Species of mycorrhizal fungus are also capable of augmenting levels of available nutrients in the soil with further organic and inorganic nutrients that are assimilable by a crop plant. Suitable species of mycorrhizal fungus include those that are capable of colonising a host plant's roots, either intracellularly as in arbuscular mycorrhizal fungi (AMF), or extracellularly as in ericoid mycorrhizal (EM) fungi.

Examples of AMF mycorrhizae of potential use in the invention include those from the Glomus, Gigaspora, Acaulospora and Sclerocystis. Suitable species include *Glomus fasciculatum, G. intraradices, G. claroideum; G. intra, G. clarum, G. brasilianum, G. deserticola, G. monosporus, G*. *mosseae, G.tortuosum, G, sinuosum, Gigaspora margarita, Gigaspora gigantean* and *Acaulospora longular.*

Ericoid mycorrhizas (EM) are known to have saprotrophic capabilities and these are thought to enable plants to receive nutrients from not-yet-decomposed materials via the decomposing actions of their ericoid partners. A suitable genus of EM of potential use in the invention is *Pezizella.*

Further species of bacteria and fungi of potential use are those that are able to act on inorganic and/or organic substrates to release compounds in soluble form from such substrates, such as phosphorus. Such species of bacteria include those from Alcaligenes, Acinetobacter, Azospirillum, Bacillus, Enterobacter, Erwinia, Flavobacterium, Paenibacillus, Pseudomonas, Rhizobium, Burkholderia, and Serratia. Examples of species of the Bacillus genus are *Bacillus megaterium, Bacillus coagulans,* species of the Azospirillum genus such as *Azospirillum brasilense,* species of the Pseudomonas genus, such as *Pseudomonas aeruginosa, Pseudomonas aurantiaca, Pseudomonas putida, Pseudomonas pseudoalcaligenes, Pseudomonas fluorescens, Pseudomonas poae,* and *Pseudomonas trivialis,* species of the Rhizobium genus such as *Bradyrhizobium* and *Rhizobium leguminosarum,* and species of the Paenibacillus genus (formerly considered as Bacillus *genus) such* as *Paenibacillus lautus.* Commonly used Rhizobium inoculants may be sourced from such companies as Becker Underwood and EMD Crop Bioscience.

A further live biological inoculant that is useful for monocot seed coating is *Trichoderma,* a fungus that is capable of making available, and in the adsorption of, mineral nutrients from the soil such as by solubilising insoluble phosphorus and zinc in the soil. Other capabilities of the fungus include the decomposition of organic matter thereby releasing calcium, potassium, and nitrogen available for plant use. By such capabilities certain *Trichoderma* species can be used to contribute to a balanced fertilisation of monocot plants in the field and thereby the requirement for adding large amounts of artificial fertilisers may be reduced by as much as 50% depending on crop type. *Trichoderma* strains are known in the art, for example, strains are known from the University of the Philippines Los Baños (UPLB), Institute of Biological Sciences.

Examples of conventional additives for increasing fertiliser efficiency, plant productivity, growth, and nutrient accumulation may be sourced from such commercial sources as Incotec Inc., Germains, Bayer CropScience, and Becker Underwood. Suitable additives may be selected from commercially available products such as Auxigrow(R) (Auxein Corp., Lansing, Mich., USA) and Amisorb(R) (Donlar Corp., Chicago) or the so-called phytochelates described by A. M. Kinnersley in Plant Growth Regul. (1993), 12(3), 207-18, which are thought to influence the availability to the plant of minimal amounts of certain metals such as Zn, Fe, Cu and the like for optimal growth and productivity. Examples of the latter include polymers of L-lactic acid, L-lactoyllactic acid and water-soluble polyaspartates. Other additives that may be applied to monocot plant structures such as monocot seed coatings of the invention include the kinds of adjuvant that are found in conventional commercial agrochemical formulations. Suitable additives for inclusion into monocot seed coatings of the invention may be selected from those described by Chester L. Foy, Pestic. Sci.(1993) 38, pp.65-76; and in EP 0357559. Seed coating compositions of the invention may further include conventional additives such as agents having wetting, dispersing and de-foaming modes of action. Suitable surface-active compounds are non-ionic, cationic and/or anionic surfactants having good emulsifying, dispersing and wetting properties. Such adjuvants for crop protection formulations are obtainable from fine chemicals producers [e.g. by Clariant AG (Muttenz, Switzerland)] and include (fatty)alcohol alkylphenol ethoxylates, polyarylphenol ethoxylates, dispersing phosphates, taurides and/or alcohol monosuccinates. The term "surfactants" also comprises mixtures of two or more surfactants and natural or synthetic phospholipids of the cephatin and lecithin series, e.g. phosphatidyl-ethanolamine, phosphatidylserine, phosphatidylglycerol, lysolecithin sugar esters. A typical de-foaming agent is Fluowet PL80B(R) (Clariant AG) and typical antifreeze compounds are glycols and polyethylene glycols. Further ingredients may include solid or liquid substances ordinarily employed in formulation technology, e.g. natural or regenerated minerals, tackifiers, thickeners or binders. Other suitable additives are emulgating protein hydrolysates, e.g. as described in EP 0297426 (Bayer AG). Dyes often used in seed treatment compositions include water-insoluble or water-soluble dyes. Examples of dyes that may be added to compositions of the invention include Colanyl Red(R) (Clariant AG, Muttenz), Rhodamin B, white pigment (titanium dioxide) or Luconyl(R) (BASF AG). Altogether additives may be used to ensure that the formulation disperses well, does not settle or freeze and differentiates the seeds from untreated seeds. Other special additives which are known to enhance seedling vigour in particular in combination with certain pesticides, e.g. fungicides in combination with 3',4',5',6'-tetrachloro-2,4,5,7-tetraiodo-fluorescein (EP0297426), may be applied to the seeds in a combined amount that is effective, preferably synergistically effective, to increase seedling vigour and plant growth.

Additionally, the organic particles of use in compositions of the invention may contain other further components such as additives selected from UV blockers such as beta-carotene or p-amino benzoic acid, colouring agents such as optical brighteners and commercially available colouring agents such as food colouring agents, plasticisers such as glycerine or soy oil, antimicrobials such as potassium sorbate, nitrates, nitrites, propylene oxide and the like, antioxidants such as vitamin E, butylated hydroxyl anisole (BHA), butylated hydroxytoluene (BHT), and other antioxidants that may be present, or mixtures thereof. The skilled addressee will appreciate that the selection of such commonly included additives will be made depending on end purpose, and perceived need.

Seed compositions of the invention may be applied to monocot plant structures such as monocot seed at a rate of application from 0.1 g to 500 g, preferably from 1 g to 100 g, most preferably from 5 g to 50 g of the active ingredient (a.i.) per 100 kg of seed.

Coatings of wax of use in the present invention also serve to protect immediately planted monocot plant structures, such as seeds from soil borne pathogens, that is to say, pathogens that are able to colonise the monocot plant structures, such as the monocot seed cuticle and/or pathogens that populate the soil and which are capable of acting on monocot seeds. Such soil borne pathogens are typically bacteria and/or fungi. Examples of soil borne bacterial and fungal pathogens that attack monocotyledonous plants include *Rhizoctonia spp.* (e.g. *R. microsclerotia* active against maize; and rice; sorghum; wheat; barley; oats; and rye;), *Aspergillus spp.* such as *A*. *flavus* and *A*. *niger* (e.g. active against maize), *Tilletia spp.* such as *T. tritici,* and *T. laevis* (e.g. active against wheat) *Sclerophthora spp.* such as *S*. *rayssiae,* and *S*. *graminicola* (e.g. active against maize), *Peronosclerospora spp.* such as *P*. *sorghi* and *P. spontanea* (e.g. active against maize). *Pythium spp.* (e g. active against maize; rice; sorghum; wheat; barley; oats; rye), *Fusarium spp.* (e.g. active against maize; rice; sorghum; wheat; barley; oats; rye), *Claviceps spp.* such as *C. purpurea* (e.g. active against rye; triticale; wheat; and barley), *C. africana* (e.g. active against sorghum), *C*. *gigantea* (e.g. active against maize), *Gibberella spp.* such as *G*. *Avenacea* (e.g. active against maize), *Burkholderia glumae* (e.g. active against rice) *Pseudomonas fuscovaginae* (e.g. active against rice), *Sclerophthora spp.* such as *S*. *macrospora* (e.g. active against rice), *Cochliobolus spp.* such as *C*. *miyabeanus* (e.g. active against rice), *Fusarium spp.* (active against rice, oats, wheat; maize), and the like.

According to a second aspect of the invention there is provided use of dry particles of wax having a melting point of ≥50°Centigrade in the manufacture of a coating composition for monocot plant structures according to the first aspect. The waxes having a melting point of preferably of ≥60°C and most preferably are made up of hard waxes having a melting point of ≥70°C. Suitable waxes include those as herein before defined such as carnauba wax, beeswax, montan wax, Chinese wax, shellac wax, spermaceti wax, candelilla wax, castor wax, ouricury wax, and rice bran wax or a mixture of two or more thereof. Preferably, the seed coating that is used includes carnauba wax particles as the sole organic material. Naturally, the skilled addressee will appreciate that the size of the organic particles to be applied to monocot plant structures such as monocot seeds will depend on the size of the structure such as a monocot seed, and the type or form of such monocot seeds that are contemplated for coating.

In a third aspect of the invention there is provided a method of manufacturing a monocot plant seed coating composition, namely the monocot seed coating composition as herein described, that comprises
1) selecting solid wax having a melting point of ≥50°C;
2) machining said organic material into particles of a volume mean diameter in the range of ≥5µm to 200 µm; and
3) adding one or more additives for enhancing at least one of seedling vigour and seedling growth from monocot plant structures, wherein the at least one additive is selected from one or more inorganic additives and/a live biological agents selected from an arbuscular mycorrhizal fungus, an ericoid mycorrhizal fungus, species of bacteria and fungi that are able to act on inorganic and/or organic substrates to release compounds in soluble form from such substrates, and a species of Trichoderma.

Preferably the wax has a melting point of ≥60°C, and most preferably is a hard waxes having a melting point of ≥70°C. Suitable waxes for use in the invention include those as herein before defined and may preferably be selected from carnauba wax, beeswax, montan wax, Chinese wax, shellac wax, spermaceti wax, candelilia wax, castor wax, ouricury wax, and rice bran wax or a mixture of two or more thereof. Preferably, the selected organic material includes a substantial proportion of carnauba wax up to 100%, for example 1 %, 10%, 20%, 30%, 40%, 50%, 60%, 70%, 80%, 90% or more or any proportion therein between, the rest being made up of is at least one other organic material as herein defined. Preferably, the wax material is solely carnauba wax which may contain further additives as herein defined, and further components such as UV blockers, antioxidants such as vitamin E and the like.

In a further aspect of the invention, there is provided a monocot plant structure coating composition, such as a monocot plant seed coating composition produced by the method as described herein.

In a further aspect of the invention there is provided a method of coating monocot plant seeds with a coating composition in dry particulate form that comprises at least one wax having a melting point of ≥50°Centigrade, the method comprising
i) providing particles of wax admixed with at least one additive for enhancing at least one of seedling vigour and seedling growth from monocot plant structures, wherein the particles have a volume mean diameter in the range of ≥5µm to 200µm and the at least one additive is selected from at least one of an inorganic additive and a live biological agent selected from an arbuscular mycorrhizal fungus, an ericoid mycorrhizal fungus, species of bacteria and fungi that are able to act on inorganic and/or organic substrates to release compounds in soluble form from such substrates, and a species of Trichoderma; and
ii) applying the particles admixed with at least one additive to monocot plant seeds.

The skilled addressee will appreciate that environmental factors that may affect monocot plant structure or monocot plant seed viability includes such factors as extremes of heat, loss of moisture and the presence of pathogens such as bacteria and/or fungi. The skilled addressee will also appreciate that the pre-determined VMD will be appropriate to the size of the monocot plant structure, for example the size of monocot seeds, to which the coating is to be applied.

Preferably the method of coating monocot plant seeds with a coating composition that comprises a waxe having a melting point of ≥50°Centigrade, comprises
i) obtaining said wax;
ii) heating the wax of i) so as to form a liquid phase or a gaseous phase;
iii) cooling the liquid phase or gaseous phase of ii) to below the melting point of the wax so as to form a solid;
iv) adding one or more additives to the solid formed in iii);
v) machining the solid wax of iii) into particles of a pre-determined VMD; and
vi) applying the particles of v) to monocot plant structures.

Alternatively, the method of coating monocot plant structures with a coating composition that comprises a wax having a melting point of ≥50°Centigrade, comprises
i) obtaining said wax;
ii) heating the wax of i) so as to form a liquid phase or a gaseous phase;
iii) adding one or more additives to the liquid phase or gaseous phase of ii);
iv) cooling the liquid phase or gaseous phase of iii) to below the melting point of the wax, forming a solid;
v) machining the solid wax of iv) into particles of a pre-determined VMD; and
vi) applying the particles of v) to monocot plant seeds.

The monocot plant structures or monocot plant seeds are typically selected from monocot plants as herein defined. Preferably, the wax is carnauba wax. Where two or more waxes of use in the invention are employed as the wax in for example, a monocot seed coating composition of the invention they may be heated together so as to form a liquid phase or a gaseous phase during which phases the organic material may be mixed, if required. Once the waxes are mixed they may be cooled to below the melting point of the wax possessing the lowest melting point in the liquid phase (where a gas phase is employed, this will be cooled to a liquid phase), forming a solid which may then be machined, such as by comminution, into particles of a pre-determined VMD as herein defined using conventional procedures. As described above, one or more additives may be added to the wax at points indicated above. It will be appreciated that the person skilled in the art will understand at what point or points in the described processes additives may be added to the organic material, depending on the additive material to be added to the wax forming particles of use in the invention.

Once the wax is in the form of particles of a known VMD, the particles may be applied to monocot plant seeds using conventional means.

The treatment composition is applied to monocot plant seeds, in dry particulate form. The wax in the above aspects may be selected from waxes having a melting point of ≥50°C, more preferably of ≥60°C, and most preferably are made up of hard waxes having a melting point of ≥70°C. Suitable waxes for use in the invention include those waxes as herein described, and may include carnauba wax, beeswax, montan wax, Chinese wax, shellac wax, spermaceti wax, candelilla wax, castor wax, ouricury wax, and rice bran wax or a mixture of two or more thereof. Preferably, the selected organic material includes a substantial proportion of carnauba wax up to 100%, for example 1%, 10%, 20%, 30%, 40%, 50%, 60%, 70%, 80%, 90% or more or any proportion therein between, the rest being made up of at least one other organic material as herein defined. Preferably, the selected organic material is solely carnauba wax which may contain further added components as herein defined, such as UV blockers, antioxidants such as vitamin E and the like.

There now follow examples that illustrate the invention. It is to be understood that the examples are not to be construed as limiting the invention in any way.

### Example 1: Growth and Vigour in Triticum aestivum

*Triticum aestivum* seed provided by Herbiseeds (Twyford, UK)

### Combination of Carnauba wax particles and Inoculant

### Rock Phosphate

Rock Phosphate (Garden Direct.UK) with a 30% P₂O₅ content is crushed using a pestle and mortar and then passed through a 32 micron mesh sieve.

### Carnauba Wax Sizing

Steps in Air Milling in Boyes Micronisation Process (for carnauba wax particles with a VMD of approx. 75µm)
1. 2kg carnauba wax blocks are first kibbled into approximately 4 to 6mm pieces in a KT Handling Ltd Model 04 kibbler (serial no. 729/C) following the manufacturer's instructions.
2. The kibbled pieces are then passed through an Apex Construction Ltd Model 314.2 Comminuting Mil) (serial no. A21306) and reduced further in size to a range of 250 to 300 µm.
3. The comminuted particles are then passed through a Hosokawa Micron Ltd Alpine 100AFG jet mill (serial no. 168092) following the manufacturer's instructions, setting the mill at a speed of 2500rpm for particles having a VMD of approx. 75µm), with a positive system pressure of 0.03bar.
4. The grinding air is to be kept to 6 bar, the system rinsing air flow and Classifying Wheel gap rinsing air are both to be set at a minimum of 0.5 bar and no more than 0.75bar, the cleaning air filter is to register a delta of no more than 5bar to achieve a final particle size with a VMD of approx. 75µm.

Rock Phosphate is combined with Carnauba wax particles (VMD 75µm) at a ratio of 1:3 (Rock Phosphate:Carnauba wax particles). A homogeneous mix of is attained through tumbling seed and carnauba wax formulation in a cylinder, adapted to produce lateral mixing/tumbling through the inclusion of angled interior vanes, placed on a Wheaton roller for 5 minutes.

### Dry Powder Formulation of Mycorrhizae International Culture Collection of VA Mycorrhizal Fungi (INVAM).

Mycorrhizae concentration is measured by diluting 1gm in 1l of water, before further diluting by taking 1ml of the suspension and making it up to 1000ml. A 20µl sample is then added to an improved Neubauer Counting Slide and a count made of 4 large squares (0.1mm^3) in both of the grids. The mean for each square is calculated and the mean of the two grids used to produce a measurement of spores per 100nl of water. The dilution factor is then applied to produce an approximation of the number of spores per gram.

Carnauba wax particles produced according to the method described above with the exception that the milling speed was set at 12,500rpm providing particles having a VMD of 16µm are combined with at a ratio of 1:3 (Mycorrhizae:Carnauba wax particles) in a 50ml tube using a Stuart roller mixer set at 25rpm for 5 minutes. This can then be used to calculate the quantity of spore/Camauba wax particles powder mix required for the seed coating based on a standard of 1x10⁴ spores gram⁻¹ of seed.

A homogeneous mix of is attained through tumbling seed and carnauba wax formulation in a cylinder, adapted to produce lateral mixing/tumbling through the inclusion of angled interior vanes, placed on a Wheaton roller for 5 minutes.

### Chitosan

Chitosan (>75% Deacetylated chitin, Poly(D-glucosamine)) (Sigma Aldrich,UK) is crushed using a pestle and mortar and then passed through a 32 micron mesh sieve.

This is combined with Carnauba wax particles (VMD 75µm) at a ratio of 1:19 (Chitosan:Carnauba wax particles). A homogeneous mix of is attained through tumbling seed and carnauba wax formulation in a cylinder, adapted to produce lateral mixing/tumbling through the inclusion of angled interior vanes, placed on a Wheaton roller for 5 minutes.

### Treatments:

1. Carnauba wax particles and Mycorrhizae
2. Carnauba wax particles and Rock Phosphate
3. Carnauba wax particles and Chitosan
4. Mycorrhizae control
5. Rock Phosphate control
6. Chitosan control
7. Carnauba wax particle control (vehicle control)
8. Untreated Control

Seeds are planted in two 84 well plug trays using moist seed potting compost (John Innes No.2). The trays are placed in a Vitopod propagator (Greenhouse Sensations, UK) at 18°C. Moisture content (Brannan Soil Moisture Meter, Fisher Scientific, UK) and pH levels (Brannan Soil pH meter, Fisher Scientific, UK) are checked to ensure that the conditions are consistent across the tray. The order of the treatments is randomised (by row units) to reduce any unforeseen bias.

At the true leaf stage the plants are carefully transplanted from the plugs to 7cm square pots filled with a sterilised top soil. The macro-nutrient (nitrates, phosphates and potassium) content of the top soil is measured using a La Motte Model STH-4 soil testing kit and recorded. Six replicates for each treatment (48 plants) are randomly assigned to each of three propagators, and further randomised within the propagator (total = 144 plants). The propagators are set at 13.5°C, 18°C and 22.5°C. Light is provided on a 16:8 Light:Dark cycle using a twin bulb T5 lighting array suspended 150mm above the propagator (Lightwave T5, 48w, 3300 lumens). T5 tubes (6500 Kelvin) deliver the bright blue/white light required by the plant for growth without emitting much heat which may scorch tender seedlings

Moisture content and pH levels are checked to ensure that the conditions are consistent across the propagator by measuring six random plants along a pathway (alternating between a W and Z). This is repeated for each propagator.

Plants are watered as required based on conditions to maintain consistent soil moisture content of 15% throughout all plants.

The lids of the propagators are removed at such time as required due to the plant height.

After 21 days the plants are removed from the propagators and the following measurements recorded:
Root weight (fresh)
Shoot weight (fresh)
% Mycorrhyzal root colonisation (by microscopic examination)
Plant tissue is measured for macro-nutrient content using the instructions provided with a La Motte Model PT-3R Plant Tissue Test kit.

### Analysis

The percentage data (root colonisation data) were arcsine transformed. The influence of the factors and their interactions are tested with a two-way analysis of variance. Where the ANOVA reveals significant effects by the factors, the differences between treatments are separated using a *post hoc* least significant difference (LSD), multiple comparison test (p ≤ 0.05).

The influence of the factors and their interactions are tested with a 2-way ANOVA. The analysis was done for each temperature separately and with temperature as a factor. For the ANOVA with temperature as a factor, treatments were used as a sub-plot factor. Fisher's Least Significance Differences were calculated at the 5% significance level to compare treatment means. Shapiro-Wilks's test was performed to test for non-normality
The above procedures are followed to apply rock phosphate, chitosan and *Glomus* sp. to seeds of Corn (*Zea mays*).

The above procedures are followed to apply rock phosphate, chitosan and *Glomus* sp. to seeds of Rice (*Oryza sativa*).

The above procedures are followed to apply rock phosphate, chitosan and *Glomus* sp. to seeds of Sorghum (*Sorghum bicolor*).

**Delivery of Macronutrients using Carnauba wax particles as a seed coating on Wheat Aim:** to assess the potential for formulating essential macronutrients into carnauba wax particles and using this as a seed coating to provide the germinating seed and seedling with supplementary nutrients to aid in early stage growth.

### Macronutrients selected:

### Phosphorus (P)

- Phosphorus (P) is an essential part of the process of photosynthesis.
- Involved in the formation of all oils, sugars, starches, etc.
- Helps with the transformation of solar energy into chemical energy; proper plant maturation; withstanding stress.
- Effects rapid growth.
- Encourages blooming and root growth.

### Potassium (K)

- Potassium is absorbed by plants in larger amounts than any other mineral element except nitrogen and, in some cases, calcium.
- Helps in the building of protein, photosynthesis, fruit quality and reduction of diseases.
- Potassium is supplied to plants by soil minerals, organic materials, and fertilizer.

Both Potassium and Phosphorus can be found in soluble form in Monobasic Potassium Phosphate or MKP (KH₂PO₄), a soluble salt commonly used as a fertiliser and plant growth supplement.

### Formulation Method

Carnauba is heated on a hotplate at 100°C to a molten state. Monopotassium phosphate (MKP) is dissolved in deionised water to the required concentration. The MKP solution is slowly added to the molten wax under stirring at 1500rpm. Stirring continues for 5 minutes before the water/wax emulsion is poured onto a metal sheet to cool. The resulting solid wax including micro-droplets of MKP is then micronized in an air mill to a VMD of approx. 10.3.

### Carnauba Wax Sizing Method

Steps in Air Milling in Boyes Micronisation Process (for carnauba wax particles with a VMD of approx. 10.3µm)
1. 2kg carnauba wax blocks are first kibbled into approximately 4 to 6mm pieces in a KT Handling Ltd Model 04 kibbler (serial no. 729/C) following the manufacturer's instructions.
2. The kibbled pieces are then passed through an Apex Construction Ltd Model 314.2 Comminuting Mill (serial no. A21306) and reduced further in size to a range of 250 to 300um.
3. The comminuted particles are then passed through a Hosokawa Micron Ltd Alpine 100AFG jet mill (serial no. 168092) following the manufacturer's instructions, setting the mill at a speed of 12,500rpm with a positive system pressure of 0.03bar.
4. The grinding air is to be kept to 6 bar, the system rinsing air flow and Classifying Wheel gap rinsing air are both to be set at a minimum of 0.5 bar and no more than 0.75bar, the cleaning air filter is to register a delta of no more than 5bar to achieve a final particle size with a VMD of approx. 10.3um.

### Experimental Method

Wax particles containing 10% MKP are added to 10g of Wheat seed, cv. Hereward (Herbiseeds, UK) at loadings of 0.1% and 1% by mass. Seed is well mixed to ensure a homogenous distribution across the seed. A third batch of seed is combined with unformulated carnauba wax particles as a control. 10 seeds for each treatment are sown in 20 cell modular seed trays with an individual cell size: Length 37mm x Width 37mm x Depth 65mm, with each tray representing a single sample. Each treatment is replicated four times.

The pots are filled with a sieved, heat-sterilised seed mix (Levingtons F1 Seed and Modular Compost - Low Nutrient)) to level with the top of the cell. Low Conductivity: 250-280 µS, Standard pH: 5.3-5.7, Mg/litre added: N - 100, P - 200, K - 200.

They are then lightly tamped and 30ml of deionised water added to each cell through a course filter. A single seed is then placed on the surface of the soil and covered with a thin layer of vermiculite to a depth of 2-3x the diameter of the seed, as per supplier recommendation. The trays are placed within plastic gravel trays (two per tray) which are lined with capillary matting to aid watering.

The gravel trays are then placed in a thermostatically controlled plant growth chamber (Fitotron SGC120, Weiss Gallenkamp, Loughborough, UK). Temperature cycling is set at 20°C/10°C on a 16/8hr schedule. Lighting at 150 µmol m^{-2 s-1} on a 16/8hr photoperiod is introduced at first emergence.

Plants are watered daily from the bottom in order to maintain a compost moisture level of approximately 40% in the cells
After 10 days the plants are removed from the individual cells and the compost mix separated from the root structure. Plants from each 10 cell tray are combined and separated into shoots, made up of the first true leaves and growing tip, and roots.

### PLANT TISSUE ANALYSIS: (conducted to the following method by NRM Laboratories (Bracknell, UK)

Total Phosphorus (P), Potassium (K), Magnesium (Mg), Calcium (Ca), Sodium (Na), Manganese (Mn), Copper (Cu), Iron (Fe), Zinc (Zn), Boron (B) determination using Inductively Coupled Plasma-Optical Emission Spectroscopy (ICP-OES) method

### EQUIPMENT

1. ICP Emission Spectrograph
2. Autosampler
3. Digital Dilutor

### REAGENTS

1. 3N Hydrochloric Acid: Dilute 250 ml. of concentrated hydrochloric acid to 1 litre using deionized water and mix well.
2. Nitric Acid: HNO₃

### STANDARDS

1. Stock Solutions: Use 1000 PPM certified, NIST traceable, plasma grade standards for the 16 listed elements.
2. Instrument Calibration Standards:
a. WAT 1 - deionized water
b. WAT 2 - Mn, Fe, Al, B, Cu, Zn, Na, Pb, Cd, Ni, Cr, Mo - Pipet 10 ml. of stock solution of each element into a 1 litre volumetric flask. Add 5 ml. of nitric acid. Dilute to volume with deionized water and mix well.
c. PLN2 - P, K, Ca, Mg - Pipet the designated ml. of stock solution into a 1 litre volumetric flask. Add 5 ml. of nitric acid. Dilute to volume with deionized water and mix well.

| *Element* | *Stock Solution ml*. | *Final Concentration ppm.* | *Instrument Readout %* |
|---|---|---|---|
| P | 10 | 10 | 1.00 |
| K | 50 | 50 | 5.00 |
| Ca | 20 | 20 | 2.00 |
| Mg | 10 | 10 | 1.00 |

3. Instrument Calibration Verification Standards:
a. A second set of calibration standards obtained from a different manufacturer.

### SAMPLE PREPARATION

Samples are dried and ground to pass through a 1mm screen.

The elements in the residue remaining after the destruction of the organic matter by ashing at 550°C are dissolved in hydrochloric acid:
1. Dry Ash
   a. Weigh 1g sample into a 10 ml. glazed, high-form porcelain crucible.
   b. Ash in a muffle furnace for 4 hours at 500 C.
   c. Let cool and add 5 ml. of 3N HCl.
   d. Place on a hot plate and boil gently for 5 minutes.
   e. Let cool and transfer to a 100 ml. volumetric flask. Dilute to volume with deionized water and mix well. Use this solution for the analysis of Mn, Fe, Al, B, Cu, Zn, Na, Pb, Cd, Ni, Cr and Mo.
   f. Dilute the solution obtained in 1e. one to ten with deionized water using a digital dilutor. Use this solution for the analysis of P, K, Ca and Mg.

### ICP PROCEDURE

1. Set up and operate the ICP Emission Spectrograph in accordance with manufacturer's specifications.
2. Mn, Fe, B, Cu, Zn, Na, Ni analysis.
   a. Choose PLANT from the method menu.
   b. Calibrate the instrument using WAT1 and WAT2 instrument calibration standards.
   c. Analyze the sample digests obtained in 1e. of the sample preparation section.
3. P, K, Ca, Mg analysis.
   a. Choose PLANTDIL from the method menu.
   b. Calibrate the instrument using WAT1 and PLN2 instrument calibration standards.
   c. Analyze the digests obtained in 1f. of the sample preparation section.

### QUALITY CONTROL

1. Following calibration, analyze one high instrument calibration standard, one instrument calibration verification standard and one quality control sample.
   a. Instrument Calibration Standard: Values must be within 3% of the known value for K and Mo. All other elements must be within 2% of the known value.
   b. Instrument Calibration Verification Standard: Values must be within 10% of the certified values.
   c. Quality Control Sample: Values for all elements must be within limits established by the Extension chemist.
2. Analyze a high instrument calibration standard after each tenth sample and at the end of the set of samples.
   a. Values must be within 8% of the known values.
   b. If any of the values are greater than 8% from the known values, recalibrate the instrument and begin sample analysis from the last "good" instrument calibration standard.
3. Prepare one duplicate sample for each 10 samples. If the set contains less than 10 samples, prepare one duplicate per set.
   a. Results on the duplicate sample should agree within 20% of the average value of the two samples.

### REFERENCES

1. Isaac, R.A. and W.C. Johnson, 1985, Elemental Analysis of Plant Tissue by Plasma Emission Spectroscopy: Collaborative Study. JAOAC. 68(3), pp 499- 505.
2. AOAC Official Method 985.01, in Official Methods of Analysis of AOAC International, 16th edition, Volume I Chapter 3, p. 4.
3. AOAC Official Method 968.08 D(a), in Official Methods of Analysis of AOAC International, 16th edition, Volume I Chapter 4, p. 23.

### Phosphate Solubilisation using Beneficial Microbes

Several bacterial species are able to impart a beneficial effect upon plant growth. Mostly they are associated with the plant rhizosphere, so they are called as rhizobacteria. This group of bacteria has been termed plant growth promoting rhizobacteria, and among them are strains from genera such as *Alcaligenes, Acinetobacter, Arthrobacter, Azospirillum, Bacillus, Burkholderia, Enterobacter, Erwinia, Flavobacterium, Paenibacillus, Pseudomonas, Rhizobium, and Serratia.*

The production of organic acids by phosphate solubilizing bacteria has been well documented and identified as the main mechanism for phosphate solubilisation. Gluconic acid seems to be the most frequent agent of phosphate solubilisation (*Pseudomonas* sp.), and 2-ketogluconic acid is also identified in strains with phosphate solubilizing ability (*Rhizobium* sp.).

Saprophytic fungi are also known to solubilise both organic and inorganic phosphates. Several genus, including *Trichoderma, Penicillium,* and *Gliocladium* have exhibited potential as biofertilisers. Morales et al (2011) demonstrated that *Penicillium albidum* was able to solubilise 64mg of organic/inorganic phosphate per gram of fungi.

### Experiment to assess the potential for delivery of Phosphate Solubilising Organisms as a seed costing using Carnauba wax particles

Using a dry spore powder of a phosphate solubilising organism, such as *Penicillium bilaii.*

Spores are combined with carnauba wax particles with a VMD of approximately 10µm at a ratio of 1:3. The powders are agitated to create a homogenous mix and applied to sterilised wheat seed at a loading of 0.1% (by mass). Additional batches of seed are treated with spores only (0.1%), Entostat only (0.1%) and untreated seed.

### Phosphate Solubilising Activity Screening

Plate screening using Pikovskays' medium (see below) is used to demonstrate phosphate solubilising activity of the treated seed. 9cm petri dishes are divided into quadrants and a seed is placed in the centre of each quadrant. Plates are incubated at 20°C for 4 days.

Active phosphate solubilising agents produce clear zones around the seed as they solubilise the insoluble mineral phosphates within the media. The radius of the clear zones is measured and compared to the mean results achieved for each treatment. Differences are analysed using one-way ANOVA and Tukey Post-Hoc diagnostic test where significance is found.

### Phosphate uptake by plant

Seeds are treated as described above.

Ca₃(PO₄)₂ is used as a source of insoluble phosphate.

Sure to Grow PET grow cubes (25x25x38mm) are soaked in deionised water containing 1% Ca₃(PO₄)₂ in suspension until saturated. Cubes are placed in free draining plant trays on a level surface to prevent nutrient run-off and migration whilst taking care to avoid pooling of water at the root zone. 10 cubes are used per tray and the mean of these represents one replicate. Each treatment is replicated 8 times.

A single wheat seed is placed in the cross-cut X in the top of each cube. Seed trays are then covered to maintain a humid environment and regularly top watered with the 1% Ca₃(PO₄)₂ suspension to maintain a moist cube. Trays are incubated at 20°C and 10°C on a 16/8hr thermal cycle. On germination the cover is removed and the seedling exposed to lighting on a 16/8hr photoperiod.

After 15 days the plants are removed from the grow cube and nutrient content of the plant tissue is analysed using the ICP method described above.

Differences in the Phosphate content between treatments are assessed statistically using one-way ANOVA.

### Pikovskays' Medium

| ***Components*** | ***Quantities (g l*⁻¹*)*** |
|---|---|
| Glucose | 10 |
| Ca₃(PO₄)₂ | 5 |
| (NH₄)₂SO₄ | 0.5 |
| NaCl | 0.2 |
| MgSO₄.7H₂O | 0.1 |
| KCl | 0.2 |
| Yeast Extract | 0.5 |
| MnSO₄.H₂O | 0.002 |
| FeSO₄.7H₂O | 0.002 |
| pH | 7.0 |

## Claims

1. A coating composition in dry particulate form for a seed of a monocot plant, comprising particles of wax
(i) having a volume mean diameter in the range of ≥5µm to 200µm;
(ii) having a melting point of ≥50°Centigrade; and
(iii) comprising at least one additive for enhancing at least one of seedling vigour and seedling growth from monocot plant structures, wherein the at least one additive is selected from one of an inorganic additive and a live biological agent selected from an arbuscular mycorrhizal fungus, an ericoid mycorrhizal fungus, species of bacteria and fungi that are able to act on inorganic and/or organic substrates to release compounds in soluble form from such substrates, and a species of Trichoderma.

2. A coating composition according to claim 1, wherein the wax is selected from carnauba wax, beeswax, montan wax, Chinese wax, shellac wax, spermaceti wax, myricyl palmitate, cetyl palmitate, candelilla wax, castor wax, ouricury wax, and rice bran wax; or a mixture of two or more thereof.

3. A coating composition according to claim 1 or claim 2, wherein the wax is carnauba wax.

4. Use of dry particles of wax having a melting point of ≥50°Centigrade in the manufacture of a composition according to any one of the preceding claims.

5. A method of manufacturing a monocot plant seed coating composition according to any one of claims 1 to 3 that comprises
i. selecting solid wax having a melting point of ≥50°Centigrade;
ii. machining the wax into particles of a mean volume diameter in the range of ≥5µm to 200µm; and
iii. adding one or more additives for enhancing at least one of seedling vigour and seedling growth from monocot plant structures, wherein the at least one additive is selected from at least one of an inorganic additive and a live biological agent selected from an arbuscular mycorrhizal fungus, an ericoid mycorrhizal fungus, species of bacteria and fungi that are able to act on inorganic and/or organic substrates to release compounds in soluble form from such substrates, and a species of Trichoderma.

6. A method of coating monocot plant seeds with a coating composition in dry particulate form that comprises at least one wax having melting point of ≥50°Centigrade, the method comprising:
i. providing particles of the wax admixed with at least one additive for enhancing at least one of seedling vigour and seedling growth from monocot plant structures, wherein the particles have a volume mean diameter in the range of ≥5µm to 200µm and the at least one additive is selected from at least one of an inorganic additive and a live biological agent selected from an arbuscular mycorrhizal fungus, an ericoid mycorrhizal fungus, species of bacteria and fungi that are able to act on inorganic and/or organic substrates to release compounds in soluble form from such substrates, and a species of Trichoderma; and
ii. applying the particles admixed with at least one additive to monocot plant seeds.

7. A method according to claim 6, wherein the wax is selected from carnauba wax, beeswax, montan wax, Chinese wax, shellac wax, spermaceti wax, candelilla wax, castor wax, ouricury wax, and rice bran wax or is a mixture of two or more thereof.

8. A method of coating monocot plant seeds according to claim 6 or claim 7 with a coating composition that comprises a wax having a melting point of ≥50°Centigrade, the method comprising
i. providing the wax;
ii. heating the wax so as to form a liquid phase or a gaseous phase;
iii. cooling the liquid phase or gaseous phase of ii) to below the melting point of the wax so as to form a solid;
iv. adding one or more additives to the solid formed in iii);
v. machining the solid wax of iii) into particles of a predetermined volume mean diameter; and
vi. applying the particles of v) to monocot plant seeds.

9. A method of coating monocot plant seeds according to any one of claims 6 to 8 with a coating composition that comprises a wax having a melting point of ≥50°Centigrade, the method comprising
i. providing the wax;
ii. heating the wax so as to form a liquid phase or a gaseous phase;
iii. adding one or more additives to the liquid phase or gaseous phase of ii);
iv. cooling the liquid phase or gaseous phase of iii) to below the melting point of the wax so as to form a solid;
v. machining the solid wax of iv) into particles of a predetermined volume mean diameter; and
vi. applying the particles of v) to monocot plant seeds.

10. A method according to any one of claims 6 to 9 wherein the wax is carnauba wax.

11. Monocot plant seeds comprising a coating composition according to any one of claims 1 to 3.

12. Monocot plant seeds according to claim 11 that are selected from seeds of *Oryza sativa, T. aestivum, Secale cereale, Avena sativa, Zea mays, Sorghum bicolor, Hordeum vulgare* and *x Triticosecale.*

## Patentansprüche

1. Beschichtungszusammensetzung in trockener partikulärer Form für einen Samen einer einkeimblättrigen Pflanze, umfassend Wachspartikel
(i) mit einem mittleren Volumendurchmesser im Bereich von ≥5 µm bis 200 µm;
(ii) mit einem Schmelzpunkt von ≥50 °Celsius; und
(iii) umfassend mindestens einen Zusatzstoff zum Verbessern mindestens eines aus der Lebenskraft des Sämlings und dem Wachstum des Sämlings aus einkeimblättrigen Pflanzenstrukturen, wobei der mindestens eine Zusatzstoff aus einem aus einem anorganischen Zusatzstoff und einem lebenden biologischen Stoff ausgewählt ist, der aus einem arbuskulären Mycorrhizapilz einem ericoiden Mycorrhizapilz, Arten von Bakterien und Pilzen, die in der Lage sind, auf anorganische und/oder organische Substrate zu wirken, um Verbindungen in löslicher Form aus solchen Substraten freizusetzen, und einer Art von Trichoderma ausgewählt ist.

2. Beschichtungszusammensetzung nach Anspruch 1, wobei das Wachs aus Carnaubawachs, Bienenwachs, Montanwachs, Chinawachs, Schellackwachs, Walratwachs, Myricylpalmitat, Cetylpalmitat, Candelillawachs, Rizinuswachs, Ouricurywachs und Reiskleiewachs ausgewählt ist; oder eine Mischung von zwei oder mehreren davon ist.

3. Beschichtungszusammensetzung nach Anspruch 1 oder Anspruch 2, wobei das Wachs Carnaubawachs ist.

4. Verwendung trockener Wachspartikel, die einen Schmelzpunkt von ≥50 °Celsius aufweisen, bei der Herstellung einer Zusammensetzung nach einem der vorstehenden Ansprüche.

5. Verfahren zum Herstellen einer Beschichtungszusammensetzung eines Samens einer einkeimblättrigen Pflanze nach einem der Ansprüche 1 bis 3, umfassend
i. das Auswählen eines festen Wachses, das einen Schmelzpunkt von ≥50 °Celsius aufweist;
ii. Bearbeiten des Wachses zu Partikeln mit einem mittleren Volumendurchmesser im Bereich von ≥5 µm bis 200 µm; und
iii. Hinzufügen eines oder mehrerer Zusatzstoffe zum Verbessern mindestens eines aus der Lebenskraft des Sämlings und dem Wachstum des Sämlings aus einkeimblättrigen Pflanzenstrukturen, wobei der mindestens eine Zusatzstoff aus einem aus einem anorganischen Zusatzstoff und einem lebenden biologischen Stoff ausgewählt ist, der aus einem arbuskulären Mycorrhizapilz einem ericoiden Mycorrhizapilz, Arten von Bakterien und Pilzen, die in der Lage sind, auf anorganische und/oder organische Substrate zu wirken, um Verbindungen in löslicher Form aus solchen Substraten freizusetzen, und einer Art von Trichoderma ausgewählt ist.

6. Verfahren zum Beschichten von Samen einkeimblättriger Pflanzen mit einer Beschichtungszusammensetzung in trockener partikulärer Form, die mindestens ein Wachs umfasst, das einen Schmelzpunkt von ≥50 °Celsius aufweist, wobei das Verfahren Folgendes umfasst:
i. Bereitstellen von Partikeln des Wachses, denen mindestens ein Zusatzstoff zum Verbessern mindestens eines aus der Lebenskraft des Sämlings und dem Wachstum des Sämlings für einkeimblättrige Pflanzenstrukturen beigemischt ist, wobei die Partikel einen mittleren Volumendurchmesser im Bereich von ≥5 µm bis 200 µm aufweisen und der mindestens eine Zusatzstoff aus einem aus einem anorganischen Zusatzstoff und einem lebenden biologischen Stoff ausgewählt ist, der aus einem arbuskulären Mycorrhizapilz einem ericoiden Mycorrhizapilz, Arten von Bakterien und Pilzen, die in der Lage sind, auf anorganische und/oder organische Substrate zu wirken, um Verbindungen in löslicher Form aus solchen Substraten freizusetzen, und einer Art von Trichoderma ausgewählt ist; und
ii. Aufbringen der Partikel, denen mindestens ein Zusatzstoff beigemischt ist, auf die Samen einkeimblättriger Pflanzen.

7. Verfahren nach Anspruch 6, wobei das Wachs aus Carnaubawachs, Bienenwachs, Montanwachs, Chinawachs, Schellackwachs, Walratwachs, Candelillawachs, Rizinuswachs, Ouricurywachs und Reiskleiewachs ausgewählt ist oder eine Mischung von zwei oder mehr davon ist.

8. Verfahren zum Beschichten von Samen einkeimblättriger Pflanzen nach Anspruch 6 oder Anspruch 7 mit einer Beschichtungszusammensetzung, die ein Wachs umfasst, das einen Schmelzpunkt von ≥50 °Celsius aufweist, wobei das Verfahren Folgendes umfasst
i. Bereitstellen des Wachses;
ii. Erwärmen des Wachses, um eine flüssige Phase oder eine gasförmige Phase zu bilden;
iii. Abkühlen der flüssigen Phase oder der gasförmigen Phase aus ii) auf unter den Schmelzpunkt des Wachses, um einen Feststoff zu bilden;
iv. Zugeben von einem oder mehreren Zusatzstoffen zu dem in iii) gebildeten Feststoff;
v. Bearbeiten des festen Wachses aus iii) zu Partikeln mit einem vorgegebenen mittleren Volumendurchmesser; und
vi. Aufbringen der Partikel aus v) auf Samen einkeimblättriger Pflanzen.

9. Verfahren zum Beschichten von Samen einkeimblättriger Pflanzen nach einem der Ansprüche 6 bis 8 mit einer Beschichtungszusammensetzung, die ein Wachs umfasst, das einen Schmelzpunkt von ≥50 °Celsius aufweist, wobei das Verfahren Folgendes umfasst
i. Bereitstellen des Wachses;
ii. Erwärmen des Wachses, um eine flüssige Phase oder eine gasförmige Phase zu bilden;
iii. Zugeben von einem oder mehreren Zusatzstoffen zu der flüssigen Phase oder zu der gasförmigen Phase aus ii);
iv. Abkühlen der flüssigen Phase oder der gasförmigen Phase aus iii) auf unter den Schmelzpunkt des Wachses, um einen Feststoff zu bilden;
v. Bearbeiten des festen Wachses aus iv) zu Partikeln mit einem vorgegebenen mittleren Volumendurchmesser; und
vi. Aufbringen der Partikel aus v) auf Samen einkeimblättriger Pflanzen.

10. Verfahren nach einem der Ansprüche 6 bis 9, wobei das Wachs Carnaubawachs ist.

11. Samen einkeimblättriger Pflanzen umfassend eine Beschichtungszusammensetzung nach einem der Ansprüche 1 bis 3.

12. Samen einkeimblättriger Pflanzen nach Anspruch 11, die ausgewählt sind aus Samen von *Oryza sativa, T. aestivum, Secale cereale, Avena sativa, Zea mays, Sorghum bicolor, Hordeum vulgare* und x *Triticosecale.*

## Revendications

1. Composition d'enrobage sous forme particulaire sèche pour une graine d'une plante monocotylédone, comprenant des particules de cire
(i) ayant un diamètre moyen en volume dans la plage de ≥ 5 µm à 200 µm ;
(ii) ayant un point de fusion ≥ 50 °C ; et
(iii) comprenant au moins un additif pour stimuler au moins un élément parmi la vigueur de plantules et la croissance de plantules à partir de structures de plantes monocotylédones, dans laquelle l'au moins un additif est sélectionné parmi un élément parmi un additif inorganique et un agent biologique vivant sélectionné parmi un champignon mycorhizien arbusculaire, un champignon mycorhizien éricoïde, des espèces de bactéries et de champignons qui sont capables d'agir sur des substrats inorganiques et/ou organiques pour libérer des composés sous forme soluble à partir de tels substrats, et une espèce de Trichoderma.

2. Composition d'enrobage selon la revendication 1, dans laquelle la cire est sélectionnée parmi la cire de carnauba, la cire d'abeille, la cire de Montana, la cire dite de Chine, la cire de gomme-laque, la cire de spermaceti, le palmitate de myricyle, le palmitate de cétyle, la cire de candelilla, la cire de ricin, la cire ouricury, et la cire de son de riz ; ou un mélange de deux de ceux-ci ou plus.

3. Composition d'enrobage selon la revendication 1 ou la revendication 2, dans laquelle la cire est la cire de carnauba.

4. Utilisation de particules sèches de cire ayant un point de fusion ≥ 50 °C dans la fabrication d'une composition selon l'une quelconque des revendications précédentes.

5. Procédé de fabrication d'une composition d'enrobage de graines de plantes monocotylédones selon l'une quelconque des revendications 1 à 3 qui comprend
i. la sélection d'une cire solide ayant un point de fusion ≥ 50 °C ;
ii. l'usinage de la cire en particules d'un diamètre moyen en volume dans la plage de ≥ 5 µm à 200 µm ; et
iii. l'ajout d'un ou de plusieurs additifs pour stimuler au moins un élément parmi la vigueur de plantules et la croissance de plantules à partir de structures de plantes monocotylédones, dans lequel l'au moins un additif est sélectionné parmi au moins un élément parmi un additif inorganique et un agent biologique vivant sélectionné parmi un champignon mycorhizien arbusculaire, un champignon mycorhizien éricoïde, des espèces de bactéries et de champignons qui sont capables d'agir sur des substrats inorganiques et/ou organiques pour libérer des composés sous forme soluble à partir de tels substrats, et une espèce de Trichoderma.

6. Procédé d'enrobage de graines de plantes monocotylédones avec une composition d'enrobage sous forme particulaire sèche qui comprend au moins une cire ayant un point de fusion ≥ 50 °C, le procédé comprenant :
i. la fourniture de particules de la cire associées dans un mélange avec au moins un additif pour stimuler au moins un élément parmi la vigueur de plantules et la croissance de plantules à partir de structures de plantes monocotylédones, dans lequel les particules ont un diamètre moyen en volume dans la plage de ≥ 5 µm à 200 µm et l'au moins un additif est sélectionné parmi au moins un élément parmi un additif inorganique et un agent biologique vivant sélectionné parmi un champignon mycorhizien arbusculaire, un champignon mycorhizicn éricoïde, des espèces de bactéries et de champignons qui sont capables d'agir sur des substrats inorganiques et/ou organiques pour libérer des composés sous forme soluble à partir de tels substrats, et une espèce de Trichoderma ; et
ii. l'application des particules associées dans un mélange avec au moins un additif à des graines de plantes de monocotylédone.

7. Procédé selon la revendication 6, dans lequel la cire est sélectionnée parmi la cire de carnauba, la cire d'abeille, la cire de Montana, la cire dite de Chine, la cire de gomme-laque, la cire de spermaceti, la cire de candelilla, la cire de ricin, la cire ouricury, et la cire de son de riz ; ou un mélange de deux de celles-ci ou plus.

8. Procédé d'enrobage de graines de plantes monocotylédones selon la revendication 6 ou la revendication 7 avec une composition d'enrobage qui comprend une cire ayant un point de fusion ≥ 50 °C, le procédé comprenant
i. la fourniture de la cire ;
ii. le chauffage de la cire de manière à former une phase liquide ou une phase gazeuse ;
iii. le refroidissement de la phase liquide ou de la phase gazeuse de ii) au-dessous du point de fusion de la cire de manière à former un solide ;
iv. l'ajout d'un ou de plusieurs additifs au solide formé dans iii) ;
v. l'usinage de la cire solide de iii) en particules d'un diamètre moyen en volume prédéterminé ; et
vi. l'application des particules de v) à des graines de plantes monocotylédones.

9. Procédé d'enrobage de graines de plantes monocotylédones selon l'une quelconque des revendications 6 à 8 avec une composition d'enrobage qui comprend une cire ayant un point de fusion ≥ 50 °C, le procédé comprenant
i. la fourniture de la cire ;
ii. le chauffage de la cire de manière à former une phase liquide ou une phase gazeuse ;
iii. l'ajout d'un ou de plusieurs additifs à la phase liquide ou phase gazeuse de ii) ;
iv. le refroidissement de la phase liquide ou de la phase gazeuse de iii) au-dessous du point de fusion de la cire de manière à former un solide ;
v. l'usinage de la cire solide de iv) en particules d'un diamètre moyen en volume prédéterminé ; et
vi. l'application des particules de v) à des graines de plantes monocotylédones.

10. Procédé selon l'une quelconque des revendications 6 à 9 dans lequel la cire est la cire de carnauba.

11. Graines de plantes monocotylédones comprenant une composition d'enrobage selon l'une quelconque des revendications 1 à 3.

12. Graines de plantes monocotylédones selon la revendication 11 qui sont sélectionnées parmi des graines de *Oryza sativa, T. aestivum, Secale cereale, Avenu sativa, Zea mays, Sorghum bicolor, Hordeum vulgare* et x *Triticosecale.*
